## Europäisches Patentamt
## European Patent Office
## Office européen des brevets

(19)

(11) Veröffentlichungsnummer: **0 047 424**
**B1**

(12) **EUROPÄISCHE PATENTSCHRIFT**

(45) Veröffentlichungstag der Patentschrift:
10.07.85

(51) Int. Cl.⁴: **G 03 B 21/64**

(21) Anmeldenummer: **81106574.7**

(22) Anmeldetag: **25.08.81**

(54) Diarähmchen.

(30) Priorität: **06.09.80 DE 3033581**

(43) Veröffentlichungstag der Anmeldung:
**17.03.82 Patentblatt 82/11**

(45) Bekanntmachung des Hinweises auf die Patenterteilung:
**10.07.85 Patentblatt 85/28**

(84) Benannte Vertragsstaaten:
**AT BE CH DE FR GB IT LI NL SE**

(56) Entgegenhaltungen:
**CH - A - 376 242**
**CH - A - 604 213**
**DE - A - 1 622 988**

(73) Patentinhaber: **LIFA Lichtfilterfabrik Inh. Oskar Kellner, Postfach 10 20 47 Neusässer Strasse, D-8900 Augsburg (DE)**

(72) Erfinder: **Kellner, Oskar, Neusässer Strasse 25, D-8900 Augsburg (DE)**

(74) Vertreter: **Ernicke, Hans-Dieter, Dipl.-Ing., Schwibbogenplatz 2b, D-8900 Augsburg (DE)**

## Beschreibung

Die Erfindung betrifft ein Diarähmchen aus Kunststoff oder dergleichen, bestehend aus zwei miteinander verbundenen Rahmenteilen, einem Hauptteil und einem an diesem um eine Achse schwenkbar befestigten Deckel, zwischen welche ein Filmbild einlegbar ist, wobei an einer Seite im Randbereich des Bildausschnittes des Hauptteiles mindestens ein hakenartig vorspringender Ansatz vorgesehen ist, durch den der Bildrand des eingelegten Filmbildes überdeckt und niedergehalten ist.

Bei einem bekannten Diarähmchen gemäß der DE-A-1 622 988 sind zur Fixierung des Filmbildes in seiner Sollage im Bildausschnitt des Diarähmchens auf der den Ansätzen gegenüberliegenden Seite am Rand des Bildausschnittes Anschlagnasen vorgesehen, so daß das Filmbild nach dem Einlegen nicht verrutschen kann. Die Anordnung von solchen Befestigungsmitteln an beiden gegenüberliegenden Seiten des Bildausschnittes erschwert jedoch das Einlegen und vor allem das Wiederherausnehmen des Filmbildes aus dem Rähmchen.

Aufgabe der Erfindung ist es, eine einfache Rähmchenkonstruktion zu schaffen, bei der das Bild leichter eingelegt und wieder herausgenommen werden kann, ohne daß es sich nach dem Einlegen in das Rähmchen aus seiner Sollage, besonders beim Schließen des Deckels verschiebt.

Die Lösung dieser Aufgabe besteht darin, daß im Randbereich der anderen Seite des Bildausschnittes keine weiteren Befestigungsmittel für das Filmbild bei aufgeklapptem Deckel vorgesehen sind. Dadurch läßt sich das Bild leicht einlegen und vor allem leicht aus dem Rähmchen herausnehmen. Es hat sich gezeigt, daß das Filmbild, obwohl es nur an einer Seite seines Randes durch die Ansätze gehalten ist, durch diese noch so fest auf seine Auflagefläche am Bildrand gedrückt wird, daß es sich nicht, auch beim Niederschwenken des Deckels ohne weiteres aus seiner Sollage verschiebt.

Die beste Wirkung wird erzielt, wenn der Ansatz an einer zur Schwenkachse des Deckels parallelen Seite, und zwar vorzugsweise an der der Schwenkachse benachbarten Seite des Bildrandes vorgesehen ist. Diese Seite entspricht in der Regel der Längsseite des Bildausschnittes. Im Rahmen der Erfindung ist es sowohl möglich, daß zwei oder mehr am Bildrand angeordnete Ansätze vorgesehen sind, als auch daß ein einziger sich leistenartig längs des Bildrandes erstreckender Ansatz gebildet wird.

Die Erfindung ist in der Zeichnung beispielsweise und schematisch dargestellt. Es zeigt

Fig. 1 Eine Draufsicht auf ein aufgeklapptes Diarähmchen,

Fig. 2 einen Schnitt gemäß der Linie II-II in Fig. 1, und

Fig. 3 eine vergrößerte Darstellung des Schnitts durch den Hauptteil im Bereich des Ansatzes.

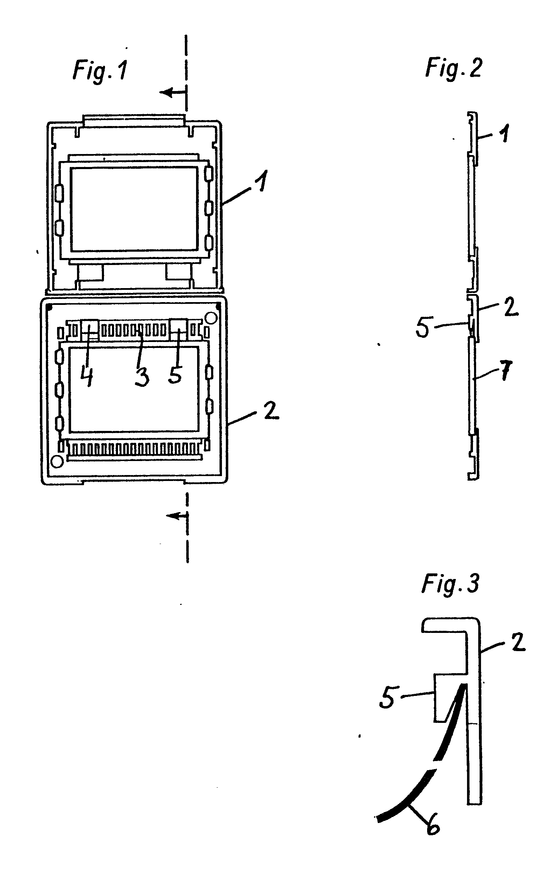

Fig. 1 zeigt das aufgeklappte Rähmchen mit dem Deckel 1 und dem Hauptteil 2, auf den der Deckel 1 heruntergeklappt wird, nachdem das Filmbild eingelegt worden ist. An der der Schwenkachse des Deckels zugewandten Seite des Randbereiches 3 sind zwei hakenartig vorspringende Ansätze 4 und 5 vorgesehen. Beim Einlegen wird das Filmbild 6 (Fig. 3) unter diese Ansätze 4 und 5 geschoben und dann auf den Hauptteil aufgelegt, so daß es die Glasscheibe 7 bzw. den Bildausschnitt überdeckt. Anstelle der Ansätze 4 und 5 kann auch ein einziger, sich von der Stelle 4 bis zur Stelle 5 erstreckender leistenartiger Vorsprung vorgesehen sein.

Durch die Ansätze 4 und 5 wird das Filmbild an seinem Rand niedergedrückt, so daß es beim Herabschwenken des Deckels 1 auf den Hauptteil 2 nicht mehr aus seiner Lage verschoben werden kann.

Im Rahmen der Erfindung können die Rahmenteile mit oder ohne darin eingesetzten glasklaren oder geätzten Deckscheiben versehen sein.

## Patentansprüche

1. Diarähmchen aus Kunststoff oder dergleichen, bestehend aus zwei miteinander verbundenen Rahmenteilen, einem Hauptteil (2) und einem an diesem um eine Achse schwenkbar befestigten Deckel (1), zwischen welche ein Filmbild (6) einlegbar ist, wobei an einer Seite (3) im Randbereich des Bildausschnittes des Hauptteiles (2) mindestens ein hakenartig vorspringender Ansatz (4, 5) vorgesehen ist, durch den der Bildrand des eingelegten Filmbildes (6) überdeckt und niedergehalten ist, dadurch gekennzeichnet, daß an den anderen Seiten des Bildausschnittes keine weiteren Befestigungsmittel für das Filmbild (6) bei aufgeklapptem Deckel vorgesehen sind.

2. Diarähmchen nach Anspruch 1, dadurch gekennzeichnet, daß der Ansatz (4, 5) an einer zur Schwenkachse des Deckels (1) parallelen Seite, vorzugsweise an der der Schwenkachse benachbarten Seite (3) des Bildrandes vorgesehen ist.

3. Diarähmchen nach Anspruch 1 oder 2, dadurch gekennzeichnet, daß zwei oder mehr am Bildrand angeordnete Ansätze (4, 5) vorgesehen sind.

4. Diarähmchen nach Anspruch 1 oder 2, dadurch gekennzeichnet, daß ein einziger sich leistenartig längs des Bildrandes erstreckender Ansatz vorgesehen ist.

## Claims

1. Slide made of plastics material or the like, comprising two interconnected frame parts, a main part (2) and a cover (1) secured pivotably thereto about an axis, between which a film image (6) can be inserted, at least one attachment (4, 5) which projects in the manner of a hook being provided on one side (3) in the edge area of the image cut-out of the main part (2), and by means of which the picture edge of the inserted film image (6) is covered and held down, characterised in that no additional securing means are provided for the film image (6) on the other sides of the image cut-out for the film image when the cover is raised.

2. Slide according to claim 1, characterised in that the projection (4, 5) is provided on one side of the cover (1) parallel to the pivot axis, preferably on the side (3) adjacent to the pivot axis of the picture edge.

3. Slide according to claim 1 or 2, characterised in that two or more attachments (4, 5) disposed on the picture edge are provided.

4. Slide according to claim 1 or 2, characterised in that a single attachment which extends along the picture edge in the manner of a strip is provided.


**Revendications**

1. Cadre pour diapositive en matière plastique ou en matière similaire, constitué de deux parties de cadre reliées l'une à l'autre, une partie principale (2) et un couvercle (1) fixé sur celle-ci de manière à pouvoir pivoter autour d'un axe, entre lesquelles une image de film (6) peut être insérée, au moins un ergot (4, 5) saillant de type à crochet étant prévu sur un côté (3) dans la région marginale de l'ouverture de la partie principale (2) réservée à l'image, ergot grâce auquel le bord de l'image de film (6) introduite est recouvert et est maintenu vers le bas, caractérisé en ce que, sur l'autre côté de l'ouverture réservée à l'image de film, il n'est prévu aucun autre moyen de fixation de l'image (6), lorsque le couvercle est ouvert.

2. Cadre pour diapositive suivant la revendication 1, caractérisé en ce que l'ergot (4, 5) est prévu sur un côté parallèle à l'axe de pivotement du couvercle (1) , de préférence sur le côté (3) du bord de l'image qui est voisin de l'axe de pivotement.

3. Cadre pour diapositive suivant la revendication 1 ou 2, caractérisé en ce qu'il est prévu deux ou plusieurs ergots (4, 5) disposés sur le bord de l'image.

4. Cadre pour diapositive suivant la revendication 1 ou 2, caractérisé en ce qu'il est prévu un seul ergot s'étendant à la manière d'une baguette le long du bord de l'image.

*Fig.1*

*Fig.2*

1

4  3  5

2

5

2

7

*Fig.3*

2

5

6